Europäisches Patentamt

European Patent Office

Office européen des brevets

(11) Veröffentlichungsnummer: **0 367 919**
**A2**

## (12) EUROPÄISCHE PATENTANMELDUNG

(21) Anmeldenummer: 89115221.7

(22) Anmeldetag: 18.08.89

(51) Int. Cl.5: **B21D 37/06, B26F 1/40**

(30) Priorität: 08.11.88 DE 3838197

(43) Veröffentlichungstag der Anmeldung:
16.05.90 Patentblatt 90/20

(84) Benannte Vertragsstaaten:
AT BE CH DE ES FR GB GR IT LI NL SE

(71) Anmelder: MUHR UND BENDER
MASCHINENBAU GMBH
Kölner Strasse 99
D-5952 Attendorn(DE)

(72) Erfinder: Steinhoff, Karl
Kapellenstrasse 23
D-5940 Lennestadt 1 Elspe(DE)

(74) Vertreter: Gesthuysen, Hans Dieter, Dipl.-Ing.
et al
Patentanwälte Gesthuysen + von Rohr
Huyssenallee 15 Postfach 10 13 33
D-4300 Essen 1(DE)

(54) Werkzeugmaschine.

(57) Eine Werkzeugmaschine mit einem an drei Seiten offenen, vorzugsweise etwa C-förmigen Maschinenrahmen (1), je einem am Maschinenrahmen (1) angebrachten oberen und unteren Werkzeugträger (2, 3), einem am oberen Werkzeugträger (2) angeordneten Antriebsschlitten, einer am unteren Werkzeugträger (3) angebrachten Sattelplatte (4) und einer ein Oberwerkzeug und ein Unterwerkzeug in einem Führungsrahmen (5) umfassenden Werkzeugeinheit (6), insbesondere Schneideinheit oder Ausklinkeinheit, bei der am oberen und unteren Werkzeugträger (2, 3) jeweils Kupplungsmittel (7), insbesondere T-Nuten, zum Kuppeln mit der Werkzeugeinheit (6) vorgesehen und die Werkzeugeinheit (6) insgesamt zwischen den oberen und den unteren Werkzeugträger (2, 3) kuppelnd einsetzbar, insbesondere in Längsrichtung des Maschinenrahmens (1), also von der offenen Stirnseite her einschiebbar ist, ist in der Praxis noch flexibler anwendbar, indem die Sattelplatte (4) gegenüber dem unteren Werkzeugträger (2) in horizontaler Ebene drehbar ist.

Fig.1

## Werkzeugmaschine

Die Erfindung betrifft eine Werkzeugmaschine mit einem an drei Seiten offenen, vorzugsweise etwa C-förmigen Maschinenrahmen, je einem am Maschinenrahmen angebrachten oberen und unteren Werkzeugträger, einem am oberen Werkzeugträger angeordneten Antriebsschlitten, einer am unteren Werkzeugträger angebrachten Sattelplatte und einer ein Oberwerkzeug und ein Unterwerkzeug in einem Führungsrahmen umfassenden Werkzeugeinheit, insbesondere Schneideinheit oder Ausklinkeinheit, wobei am oberen und unteren Werkzeugträger jeweils Kupplungsmittel, insbesondere T-Nuten, zum Kuppeln mit der Werkzeugeinheit vorgesehen und die Werkzeugeinheit insgesamt zwischen den oberen und den unteren Werkzeugträger kuppelnd einsetzbar, insbesondere in Längsrichtung des Maschinenrahmens, also von der offenen Stirnseite her einschiebbar ist.

Die bekannte Werkzeugmaschine, von der die Erfindung ausgeht (DE-AS 10 04 891), weist als Werkzeugeinheit eine Ausklinkeinheit auf. Das Oberwerkzeug ist dabei in einem Führungsrahmen in Führungsschienen vertikal verschiebbar geführt. Das Oberwerkzeug weist am oberen Ende ein T-förmiges bzw. hammerkopfartiges Kupplungsmittel auf, das in ein korrespondierendes, hier als T-Nut ausgeführtes Kupplungsmittel am oberen Werkzeugträger einführbar ist. In entsprechender Weise hat der Führungsrahmen der Werkzeugeinheit, der das Unterwerkzeug aufnimmt, am unteren Ende eine umgekehrt T-förmige Platte als Kupplungsmittel, die in ein ebenfalls als T-Nut ausgeführtes Kupplungsmittel am unteren Werkzeugträger eingeschoben werden kann. Die gesamte Werkzeugeinheit insgesamt wird also in Längsrichtung des Maschinenrahmens, von der offenen Stirnseite her kuppelnd zwischen den oberen und den unteren Werkzeugträger eingeschoben.

Die zuvor erläuterte, bekannte Werkzeugmaschine ist insoweit zweckmäßig, als sie einen schnellen, einfachen Austausch der Werkzeugeinheit ermöglicht, wobei gleichzeitig wegen der Selbstführung der Werkzeuge in der Werkzeugeinheit insbesondere beim Schneiden bzw. beim Ausklinken usw. auftretende Querkräfte innerhalb der Werkzeugeinheit kompensiert bzw. abgefangen werden können. Die bekannte Werkzeugmaschine ist aber noch nicht flexibel genug, da beispielsweise eine Folge von Gehrungsschnitten mit unterschiedlichen Gehrungswinkeln zwischen jeweils zwei Schnitten ein Auswechseln der Werkzeugeinheit gegen eine andere, den folgenden Gehrungswinkel aufweisenden Werkzeugeinheit erforderlich macht.

Der Lehre der Erfindung liegt nun die Aufgabe zugrunde, die bekannte Werkzeugmaschine so auszugestalten und weiterzubilden, daß sie in der Praxis noch flexibler anwendbar ist.

Die zuvor aufgezeigte Aufgabe ich dadurch gelöst, daß die Sattelplatte gegenüber dem unteren Werkzeugträger in horizontaler Ebene drehbar ist. Erfindungsgemäß ist erkannt worden, daß die Verwendung einer selbstgeführten Werkzeugeinheit die Möglichkeit schafft, durch Drehung der Sattelplatte gegenüber dem unteren Werkzeugträger z. B. bei Verwendung einer Schneideinheit als Werkzeugeinheit praktisch jeden beliebigen Gehrungswinkel einfach einzustellen. Das ist natürlich sehr viel einfacher, als jeweils die Werkzeugeinheit selbst auszuwechseln. Außerdem ist diese Technik natürlich auch kostenmäßig sehr viel günstiger, da nicht Werkzeugeinheiten für die verschiedensten Gehrungswinkel vorgehalten werden müssen. Entsprechende Handhabungsvorteile ergeben sich auch für andere Arten von Werkzeugeinheiten mit nicht drehsymmetrischen Werkzeugen.

Es gibt nun verschiedene Möglichkeiten, die zuvor erläuterte Lehre der Erfindung auszugestalten und weiterzubilden. Dazu wird einerseits auf die dem Anspruch 1 nachgeordneten Ansprüche verwiesen. Andererseits wird dazu auf die nachfolgende Erläuterung eines bevorzugten Ausführungsbeispiels anhand der Zeichnung verwiesen.

In der Zeichnung zeigt

Fig. 1 in perspektivischer Ansicht, ausschnittweise, eine Werkzeugmaschine gemäß der Erfindung,

Fig. 2 vergrößert, teilweise geschnitten, eine besonders bevorzugte Werkzeugeinheit für eine Werkzeugmaschine gemäß Fig. 1.

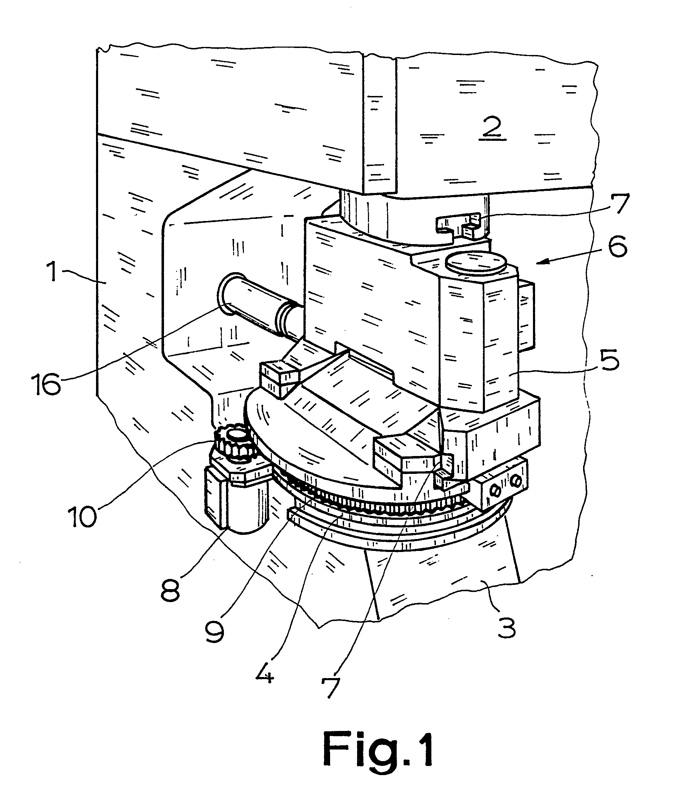

Die in Fig. 1 ausschnittweise, in perspektivischer Ansicht dargestellte Werkzeugmaschine weist zunächst einen an drei Seiten offenen, hier und vorzugsweise etwa C-förmigen Maschinenrahmen 1 auf. Am Maschinenrahmen 1 angebracht ist ein oberer Werkzeugträger 2 und ein unterer Werkzeugträber 3. Nicht erkennbar ist in Fig. 1, daß am oberen Werkzeugträger 2 in an sich bekannter Weise ein Antriebsschlitten angeordnet ist. Erkennbar ist hingegen, daß am unteren Werkzeugträger 3 eine Sattelplatte 4 angebracht ist. Auf der Sattelplatte 4 erkennt man in Fig. 1 eine ein Oberwerkzeug und ein Unterwerkzeug in einem Führungsrahmen 5 umfassende Werkzeugeinheit 6. Die Werkzeuge in der Werkzeugeinheit 6 sind also im Führungsrahmen 5 selbstgeführt, wie das an sich aus dem Stand der Technik bekannt und eingangs der Beschreibung erläutert worden ist.

Am oberen und am unteren Werkzeugträger 2, 3 sind erkennbar jeweils Kupplungsmittel 7, die hier als T-Nuten ausgeführt sind. Andere Arten von Kupplungsmitteln können natürlich hier ebenfalls vorgesehen sein. Diese Kupplungsmittel 7 dienen zum Kuppeln der Werkzeugträger 2, 3 mit der Werkzeugeinheit 6, die also insgesamt kuppelnd zwischen den oberen und den unteren Werkzeugträger 2, 3 einsetzbar ist. Dieses Einsetzen geschieht im dargestellten Ausführungsbeispiel wie im Stand der Technik dadurch, daß die Werkzeugeinheit 6 in Längsrichtung des Maschinenrahmens 1, also von der offenen Stirnseite des Maschinenrahmens 1 her, mit entsprechenden Hammerköpfen bzw. T-Köpfen in die als T-Nuten ausgeführten Kupplungsmittel 7 eingeschoben wird.

Von erfindungswesentlicher Bedeutung ist nun zunächst, daß die Sattelplatte 4 gegenüber dem unteren Werkzeugträger 2 in horizontaler Ebene drehbar ist. Man kann in Fig. 1 ohne weiteres erkennen, daß durch die Drehung der Sattelplatte 4 gegenüber dem unteren Werkzeugträger 2 in horizontaler Ebene die Werkzeuge in der Werkzeugeinheit 6 gegenüber einem beispielsweise quer zum Maschinenrahmen 1 liegenden Werkstück in beliebige Winkel gebracht werden können.

Die Drehbewegung der Sattelplatte 4 kann in einer oder in beiden Drehrichtungen durch Anschläge begrenzt sein. Auch Zwischeneinstellungen durch Rastung bei besonders häufig vorkommenden Drehwinkeln, beispielsweise entsprechend häufig gewählten Gehrungswinkeln können vorgesehen sein. Das alles ist in der Zeichnung nicht dargestellt.

Dargestellt ist in Fig. 1 hingegen, daß ein motorischer, insbesondere als Hydraulikmotor ausgeführter Drehantrieb 8 für die Sattelplatte 4 vorgesehen ist. Ein Hydraulikmotor als Drehantrieb 8 ist besonders deshalb zweckmäßig, weil für den Antrieb der Werkzeugmaschine sowieso an vielen Stellen Hydraulikmedium zugeführt werden muß.

Wie der Drehantrieb 8 mit der Sattelplatte 4 antriebstechnisch gekuppelt ist, bleibt den konstruktiven Einfällen der Fachleute überlassen. Besonders zweckmäßig, weil nämlich im rauhen Betrieb besonders wenig störungsanfällig ist eine Gestaltung des Drehantriebs 8, die dadurch gekennzeichnet ist, daß die Sattelplatte 4 einen außen umlaufenden Zahnkranz 9 und der Drehantrieb 8 ein in den Zahnkranz 9 eingerücktes oder einrückbares Ritzel 10 aufweist. Ist durch Anschläge die Gesamt-Drehbewegung der Sattelplatte 4 auf einen bestimmten Winkel unter 360° begrenzt, so muß sich der Zahnkranz 9 am Außenumfang der Sattelplatte 4 nur über den für die Drehung tatsächlich benötigten Winkelbereich erstrecken.

Wegen der Drehbarkeit der Werkzeugeinheit 6 gemeinsam mit der Sattelplatte 4 muß auch die Verbindung der Werkzeugeinheit 6 zum oberen Werkzeugträger 2 eine Drehbewegung zulassen.

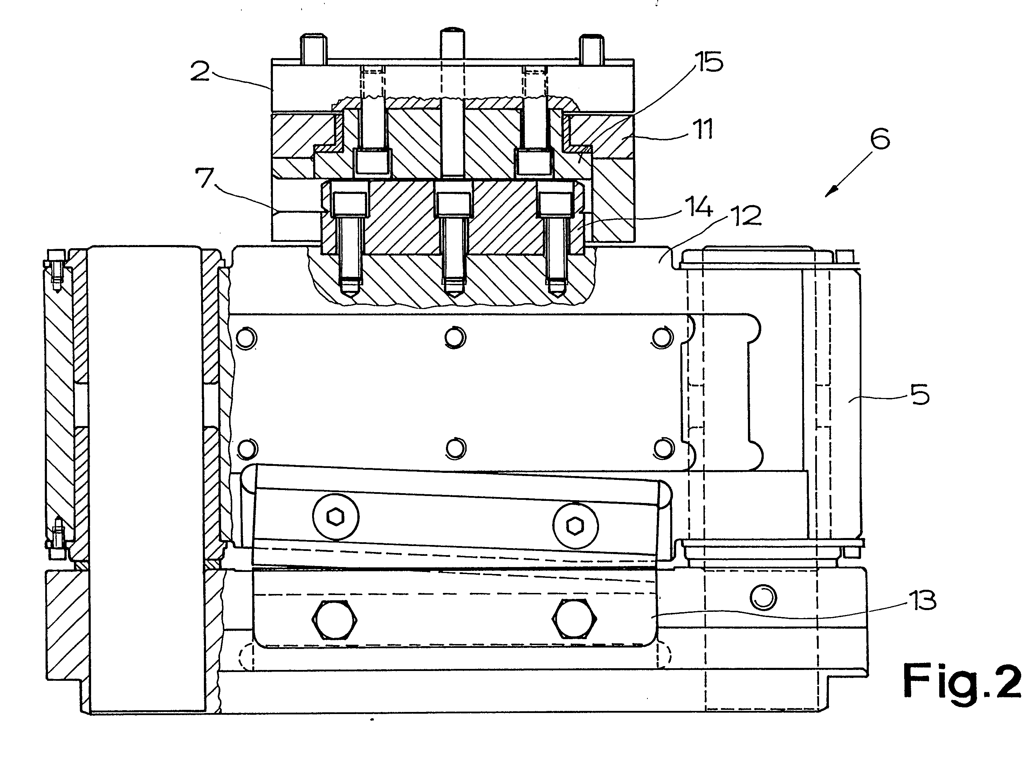

Das kann nun dadurch realisiert werden, daß das Kupplungsmittel am oberen Werkzeugträger drehsymmetrisch ausgeführt, die Werkzeugeinheit am oberen Werkzeugträger also axial angekuppelt, aber gegenüber dem oberen Werkzeugträger frei drehbar ist. Im dargestellten und insoweit bevorzugten Ausführungsbeispiel ist das aber dadurch realisiert, daß der obere Werkzeugträger 2 ein das Kupplungsmittel 7 tragendes, gegenüber dem Antriebsschlitten drehbares Tragteil 11 aufweist. Dies ist in Fig. 2 besonders deutlich zu erkennen. Dort ist zunächst das Oberwerkzeug 12 und das Unterwerkzeug 13 zu sehen. Am Oberwerkzeug 12 ist ein als T-Kopf ausgeführtes Kupplungsmittel 14 angeschraubt, das in dem als T-Nut ausgeführten Kupplungsmittel 7 des oberen Werkzeugträgers 2 verschiebbar ist. In Fig. 2 ist die offene Stirnseite des Maschinenrahmens 1 links und die geschlossene Seite des Maschinenrahmens 1 rechts zu verstehen.

Am im übrigen weiteren nicht dargestellten oberen Werkzeugträger 2 befindet sich an einer hammerkopfartigen Drehfassung 15 das die Drehfassung 15 U-förmig überfassende Tragteil 11. Unter Beibehaltung der Kraftübertragungsverbindung zum nicht dargestellten Antriebsschlitten im oberen Werkzeugträger 2 kann folglich die Werkzeugeinheit 6 komplett zusammen mit dem Tragteil 11 gegenüber dem oberen Werkzeugträger 2 gedreht werden.

Eine äquivalente Lösung bestände darin, ein entsprechend drehbares Verbindungsteil an der Werkzeugeinheit vorzusehen, also das Kupplungsmittel 14 gegenüber der Werkzeugeinheit 6 beispielsweise drehbar zu lagern.

Um die Werkzeugeinheit 6, die mitunter ja ein erhebliches Gewicht hat, nicht von Hand aus der Sattelplatte 4 nach vorn herausziehen oder in die Sattelplatte 4 hineinschieben zu müssen, empfiehlt es sich, wie an sich bekannt, am unteren Werkzeugträger 3 einen in Längsrichtung des Maschinenrahmens 1 wirkenden Schubantrieb 16 vorzusehen, durch den dann die Werkzeugeinheit 6 stirnseitig aus der Sattelplatte 4 herausschiebbar und ggf. in Gegenrichtung in die Sattelplatte 4 hineinziehbar ist. Dieser Schub antrieb ist im dargestellten Ausführungsbeispiel als Hydraulikantrieb ausgeführt und in Fig. 1 lediglich andeutungsweise zu erkennen. Tatsächlich ist bei dem dargestellten Ausführungsbeispiel der Schubantrieb 16 zwischen der Sattelplatte 4 und dem Maschinenrahmen 1 angeordnet und nur in der mittleren Normalstellung der Sattelplatte 4 mit der Werkzeugeinheit 6 gekuppelt. Bei in horizontaler Ebene gedrehter Sattelplatte 4 und Werkzeugeinheit 6 hingegen ist der Schubantrieb 16 nicht in der Lage, die Werkzeugeinheit 6 zu bewegen. Das ist eine konstruktiv zweckmäßige Lösung.

Grundsätzlich wäre es auch möglich, den Schubantrieb an der Sattelplatte selbst anzubringen, also den Schubantrieb zwischen einem an der Sattelplatte vorgesehenen Widerlager und der Werkzeugeinheit wirken zu lassen. Dann könnte der Schubantrieb die Werkzeugeinheit in jeder Drehstellung der Sattelplatte aus der Sattelplatte herausschieben oder in die Sattelplatte hineinziehhen. Das ist in der Zeichnung aber nicht dargestellt.

Aus sicherheitstechnischen Gründen empfiehlt es sich, daß vor dem Herausschieben der Werkzeugeinheit 6 aus der Sattelplatte 4 das Oberwerkzeug auf das Unterwerkzeug zwangsweise absenkbar ist.

Schließlich zeigt Fig. 2, daß nach bevorzugter Lehre der Erfindung die Werkzeugeinheit 6 einen als Säulenführung ausgeführten Führungsrahmen 5 aufweist. Führungsrahmen in Form von Säulenführungen für Werkzeugeinheiten der in Rede stehenden Art sind an sich natürlich bekannt, wozu beispielsweise auf die Zeitschrift "Blech, Rohre, Profile" 31 (1984), Seiten 166 und 167 zu verweisen ist.

**Ansprüche**

1. Werkzeugmaschine mit einem an drei Seiten offenen, vorzugsweise etwa C-förmigen Maschinenrahmen (1), je einem am Maschinenrahmen (1) angebrachten oberen und unteren Werkzeugträger (2, 3), einem am oberen Werkzeugträger (2) angeordneten Antriebsschlitten, einer am unteren Werkzeugträger (3) angebrachten Sattelplatte (4) und einer ein Oberwerkzeug und ein Unterwerkzeug in einem Führungsrahmen (5) umfassenden Werkzeugeinheit (6), insbesondere Schneideinheit oder Ausklinkeinheit, wobei am oberen und unteren Werkzeugträger (2, 3) jeweils Kupplungsmittel (7), insbesondere T-Nuten, zum Kuppeln mit der Werkzeugeinheit (6) vorgesehen und die Werkzeugeinheit (6) insgesamt zwischen den oberen und den unteren Werkzeugträger (2, 3) kuppelnd einsetzbar, insbesondere in Längsrichtung des Maschinenrahmens (1), also von der offenen Stirnseite her einschiebbar ist, **dadurch gekennzeichnet**, daß die Sattelplatte (4) gegenüber dem unteren Werkzeugträger (2) in horizontaler Ebene drehbar ist.

2. Werkzeugmaschine nach Anspruch 1, dadurch gekennzeichnet, daß die Drehbewegung der Sattelplatte (4) in beiden Drehrichtungen durch Anschläge begrenzt ist.

3. Werkzeugmaschine nach Anspruch 1 oder 2, dadurch gekennzeichnet, daß ein motorischer, insbesondere als Hydraulikmotor ausgeführter Drehantrieb (8) für die Sattelplatte (4) vorgesehen ist.

4. Werkzeugmaschine nach Anspruch 3, dadurch gekennzeichnet, daß die Sattelplatte (4) ei

nen außen umlaufenden Zahnkranz (9) und der Drehantrieb (8) ein in den Zahnkranz (9) eingerücktes oder einrückbares Ritzel (10) aufweist.

5. Werkzeugmaschine nach einem der Ansprüche 1 bis 4, dadurch gekennzeichnet, daß das Kupplungsmittel am oberen Werkzeugträger drehsymmetrisch aus geführt, die Werkzeugeinheit am oberen Werkzeugträger also axial angekuppelt, aber gegenüber dem oberen Werkzeugträger frei drehbar ist.

6. Werkzeugmaschine nach einem der Ansprüche 1 bis 4, dadurch gekennzeichnet, daß der obere Werkzeugträger (2) ein das Kupplungsmittel (7) tragendes, gegenüber dem Antriebsschlitten drehbares Tragteil (11) aufweist.

7. Werkzeugmaschine nach einem der Ansprüche 1 bis 6, dadurch gekennzeichnet, daß am unteren Werkzeugträger (3) ein in Längsrichtung des Maschinenrahmens (1) wirkender, insbesondere als Hydraulikantrieb ausgeführtes Schubantrieb (16) vorgesehen ist und daß die Werkzeugeinheit (6) mittels des Schubantriebs (16) stirnseitig aus der Sattelplatte (4) herausschiebbar und ggf. in Gegenrichtung in die Sattelplatte (4) hineinziehbar ist.

8. Werkzeugmaschine nach Anspruch 7, dadurch gekennzeichnet, daß der Schubantrieb (16) zwischen Sattelplatte (4) und Maschinenrahmen (1) angeordnet und nur in der mittleren Normalstellung der Sattelplatte (4) mit der Werkzeugeinheit (6) gekuppelt ist.

9. Werkzeugmaschine nach Anspruch 7, dadurch gekennzeichnet, daß der Schubantrieb an der Sattelplatte angeordnet ist.

10. Werkzeugmaschine nach einem der Ansprüche 1 bis 9, dadurch gekennzeichnet, daß vor dem Herausschieben der Werkzeugeinheit (6) aus der Sattelplatte (4) das Oberwerkzeug auf das Unterwerkzeug zwangsweise absenkbar ist.

11. Werkzeugmaschine nach einem der Ansprüche 1 bis 10, dadurch gekennzeichnet, daß die Werkzeugeinheit (6) einen als Säulenführung ausgeführten Führungsrahmen (5) aufweist.

**Fig.1**

Fig.2

EP 0 367 919 A2